# EUROPÄISCHE PATENTANMELDUNG

(11) **EP 3 660 573 A1**
(43) Veröffentlichungstag der Anmeldung: **03.06.2020**
(21) Anmeldenummer: 19211504.6
(22) Anmeldetag: 26.11.2019
(51) Int. Cl.: G02B 26/08, B23K 26/352, G03H 1/00, G02B 27/09

(54) **OPTISCHE ANORDNUNG ZUR STRUKTURIERUNG VON OBERFLÄCHEN EINES SUBSTRATES**

(30) Priorität: 28.11.2018 DE 102018220434
(71) Anmelder: FRAUNHOFER-GESELLSCHAFT zur Förderung der angewandten Forschung e.V., 80686 München (DE); Technische Universität Dresden, 01069 Dresden (DE)
(72) Erfinder: Alamri, Sabri, 01277 Dresden (DE); Kunze, Tim, 01277 Dresden (DE); Voisiat, Bogdan, 01067 Dresden (DE)
(74) Vertreter: Pfenning, Meinig & Partner mbB

(57) **Zusammenfassung**

Bei der optischen Anordnung zur Strukturierung von Oberflächen eines Substrates (S) ist ein Laserstrahl (1) mittels mindestens einem zur räumlichen Manipulation elektromagnetischer Strahlung ausgebildeten Element (SLM), das an eine elektronische Steuerung angeschlossen ist, und mindestens einem weiteren optischen Element (L, PL, CL, SLM) so fokussiert auf eine zu strukturierende Oberfläche des Substrates (S) in Form von Teilstrahlen des Laserstrahls (1) gerichtet, dass die Teilstrahlen im Bereich der jeweiligen Oberfläche miteinander interferieren.

## Beschreibung

Die Erfindung betrifft eine optische Anordnung zur Strukturierung von Oberflächen eines Substrates, wobei damit die Möglichkeit einer direkten Laserinterferenzstrukturierung (DLIP) gegeben sein soll.

Das DLIP-Verfahren hat breiten Eingang in das Feld der Oberflächenstrukturierung gefunden. Es können unterschiedliche Materialien so strukturiert werden. Dabei erfolgt eine Teilung eines Laserstrahls in mindestens zwei Teilstrahlen. Die Teilstrahlen werden dann so fokussiert auf die jeweilige Oberfläche gerichtet, dass sie dort miteinander interferieren. Für die Ausbildung solcher Oberflächenstrukturen spielt die Interferenzperiode eine wichtige Rolle.

Bei bekannten Aufbauten kann eine Veränderung der Interferenzperiode durch eine Bewegung mindestens eines optischen Elements erreicht werden. Dies erschwert aber eine Veränderung der Interferenzperiode, insbesondere bei hohen Prozessgeschwindigkeiten, was zu einer schrittweisen Vorgehensweise führt, da eine Veränderung der Interferenzperiode erst nach Beendigung eines vorhergehenden Strukturierungsschrittes erfolgen kann.

Mit den bekannten Aufbauten ist auch kein Wechsel zwischen einem Interferenzbetrieb und einer Strukturierung mit einem einzelnen Laserstrahl (direktes Laserschreiben) möglich.

Bei den bekannten optischen Aufbauten erfolgt die Teilung eines Laserstrahls durch Strahlteilung. Die Teilstrahlen werden dabei parallel zueinander ausgerichtet und dann mittels mindestens einer Linse oder einem optischen Prisma überlappt, so dass sie im Bereich der zu strukturierenden Oberfläche miteinander interferieren. Solche technischen Lösungen sind beispielsweise aus DE 10 2011 011 734 B4, EP 2 431 120 A1 oder DE 10 2013 004 869 A1 bekannt.

Auch bei diesen technischen Lösungen bestehen wegen der erforderlichen Bewegung mindestens eines optischen Elements zur Variation der Interferenzperiode die bereits genannten Nachteile. Es ist auch kein einfacher Übergang vom Interferenzbetrieb zum direkten Laserschreiben möglich.

Dadurch sind die erreichbare Arbeitsproduktivität sowie die Flexibilität bei einer Struktureirung begrenzt.

Es ist daher Aufgabe der Erfindung, Möglichkeiten zur Erhöhung der Flexibilität und Arbeitsproduktivität bei einer Oberflächenstrukturierung mit Laserstrahlung anzugeben.

Erfindungsgemäß wird diese Aufgabe mit einer Anordnung, die die Merkmale des Anspruchs 1 aufweist, gelöst. Vorteilhafte Ausgestaltungen und Weiterbildungen der Erfindung können mit in untergeordneten Ansprüchen bezeichneten Merkmalen realisiert werden.

Bei der erfindungsgemäßen optischen Anordnung zur Strukturierung von Oberflächen eines Substrates ist ein Laserstrahl mittels mindestens einem zur räumlichen Manipulation elektromagnetischer Strahlung (Spatial Light Modulator, SLM) ausgebildeten Element, das an eine elektronische Steuerung angeschlossen ist, und mindestens einem weiteren optischen Element so fokussiert auf eine zu strukturierende Oberfläche des Substrates in Form von Teilstrahlen des Laserstrahls gerichtet, dass die Teilstrahlen im Bereich der jeweiligen Oberfläche miteinander interferieren.

Die Fokussierung kann so erfolgen, dass die Fokusebene genau in der Ebene der zu strukturierenden Oberfläche, in einem kleinen Abstand im Strahlengang der Teilstrahlen vor oder nach der Ebene in der die jeweilige Oberfläche angeordnet ist, angeordnet ist. Es sollte jedoch gesichert sein, dass mit der Interferenz ein lokal definierter Abtrag oder eine Modifikation von Werkstoff, beispielsweise ein lokal definiertes Schmelzen von Werkstoff, an der Oberfläche des jeweiligen Substrates erreicht werden kann.

Das mindestens eine zur räumlichen Manipulation elektromagnetischer Strahlung ausgebildete Element sollte aber auch so angesteuert werden können, dass die Teilstrahlen mit ihren optischen Achsen parallel zueinander ausgerichtet, als quasi ein Laserstrahl auf die jeweilige Oberfläche für einen Werkstoffabtrag oder eine Werkstoffmodifikation gerichtet werden können, wenn dies gewünscht wird.

Das mindestens eine zur räumlichen Manipulation elektromagnetischer Strahlung ausgebildete Element kann dazu mehrere jeweils einzeln ansteuerbare Laserstrahlung transmittierende oder reflektierende Einzelelemente aufweisen, mit denen eine Veränderung der Ausrichtung der optischen Achsen von Teilstrahlen, eine Strahlformung von Teilstrahlen, eine Ausbildung von Teilstrahlbündeln mit Teilstrahlen und/oder eine steuerbare Brechung von Teilstrahlen erreichbar ist.

Ein zur räumlichen Manipulation elektromagnetischer Strahlung ausgebildetes Element kann insbesondere ein transmittierendes oder reflektierendes Element sein.

Ein weiteres optisches Element, das im Strahlengang vor oder nach dem mindestens einen zur räumlichen Manipulation elektromagnetischer Strahlung ausgebildeten Element angeordnet sein kann, kann eine optische Linse, eine Zylinderlinse und/oder ein weiteres zur räumlichen Manipulation elektromagnetischer Strahlung ausgebildetes Element sein.

Ein zur räumlichen Manipulation elektromagnetischer Strahlung ausgebildetes Element kann auch Gruppen von einzeln ansteuerbaren Laserstrahlung transmittierenden oder reflektierenden Einzelelementen aufweisen. Mit den Gruppen kann dann jeweils ein spezifisches Muster strukturiert werden, das sich von Mustern, die mit anderen Gruppen von Einzelelementen ausgebildet werden, unterscheiden kann.

Ein weiteres optisches Element, mit dem linienförmige Teilstrahlen auf eine zu strukturierende Oberfläche gerichtet sind, kann eine Zylinderlinse oder ein Paar von anamorphotischen Prismen sein.

In einer einfachen Ausführungsform kann ein Laserstrahl auf ein zur räumlichen Manipulation elektromagnetischer Strahlung ausgebildetes Element gerichtet sein. Mit den Einzelelementen des mindestens einen zur räumlichen Manipulation elektromagnetischer Strahlung ausgebildeten Elements können mindestens zwei Teilstrahlen oder Bündel von Teilstrahlen erhalten werden, die dann auf eine fokussierende optische Linse auftreffen, deren Brennpunktebene im Bereich der zu strukturierenden Oberfläche angeordnet ist und die Teilstrahlen in diesem Bereich miteinander interferieren.

Die Interferenzperiode kann durch eine entsprechende Ansteuerung der Einzelelemente des mindestens einen zur räumlichen Manipulation elektromagnetischer Strahlung ausgebildeten Elements erreicht werden, in dem die Auftreffwinkel der Teilstrahlen auf die fokussierende optische Linse verändert werden.

In einer weiteren Ausführungsform kann zwischen dem mindestens einen zur räumlichen Manipulation elektromagnetischer Strahlung ausgebildeten Element und der fokussierenden optischen Linse ein zweites zur räumlichen Manipulation elektromagnetischer Strahlung ausgebildetes Element im Strahlengang der Teilstrahlen angeordnet sein, mit dem die optischen Achsen der Teilstrahlen parallel zueinander ausgerichtet werden können.

Mit den bis hierher beschriebenen Ausführungsformen kann der Auftreffwinkel θ, mit dem Teilstrahlen auf die jeweilige zu strukturierende Oberfläche eines Substrates auftreffen, elektronisch gesteuert, die Anzahl der Teilstrahlen variiert und der Laserstrahl nicht in Teilstrahlen zerlegt werden.

Ist ein weiteres zur räumlichen Manipulation elektromagnetischer Strahlung ausgebildetes Element (SLM2) im Strahlengang der Teilstrahlen oder Teilstrahlenbündel angeordnet, kann dieses als Verzögerer für die elektromagnetischen Wellen, die zu einer Steuerung der Phase und Polarisation der einzelnen Teilstrahlen führt für eine komplexe steuerbare periodische Ausbildung von an der jeweiligen Oberfläche ausgebildeten Strukturierungsmustern genutzt werden.

Diese Vorteile machen die Interferenzbildung und deren Steuerung extrem flexibel und schnell und können sie im Vergleich zu den herkömmlichen Lösungen, bei denen eine Bewegung optischer Elemente erforderlich ist, erheblich beschleunigen. Die Präzision und Wiederholbarkeit von ausgebildeten Strukturierungen kann ebenfalls verbessert werden.

Bei einer weiteren Ausführungsform kann ein Laserstrahl auf das mindestens eine zur räumlichen Manipulation elektromagnetischer Strahlung ausgebildete Element auftreffen. Mit seinen ansteuerbaren Einzelelementen ist ein Brechungsgitter gebildet. Die damit erhaltenen Teilstrahlen können dann wieder mittels einer fokussierenden optischen Linse, auf die die Teilstrahlen auftreffen, im Bereich einer zu strukturierenden Oberfläche zur Interferenz gebracht werden.

Optional kann eine zweite optische Linse im Strahlengang der Teilstrahlen, also im Nachgang zu dem mindestens einen zur räumlichen Manipulation elektromagnetischer Strahlung ausgebildeten Element angeordnet sein, mit dem die optischen Achsen der Teilstrahlen parallel zueinander ausgerichtet werden, bevor sie auf die fokussierende optische Linse auftreffen.

Diese Ausführungsform ist besonders geeignet, um mit Gruppen von Einzelelementen jeweils individuelle Strukturierungen lokal definiert an der jeweiligen Oberfläche ausbilden zu können. Jede Gruppe kann dabei so angesteuert werden, dass sie ein individuelles Brechungsgitter bildet, mit dem eine bestimmte Strukturperiode, eine bestimmte Form und/oder Orientierung der auszubildenden Strukturierung erreicht werden kann/können. Es können sehr dekorative oder sichere Motive mit sehr komplexen Merkmalen in einem einzelnen Prozessschritt ausgebildet und dabei zumindest nahezu die gesamte Energie des einen Laserstrahls genutzt werden.

Bei dieser Ausführungsform mit Gitterfunktion können bei einer einzigen Bestrahlung gleichzeitig mehrere Strukturelemente, die sich auch voneinander unterscheiden können, ausgebildet werden. Sie können unterschiedliche Interferenzperioden und Formen, insbesondere komplexe Formen aufweisen und auch Hologramme bilden.

Bei einer weiteren Ausführung der Erfindung kann ein herkömmlicher Laserstrahl, der üblicherweise eine Gaussche-Leistungsdichteverteilung im Strahlquerschnitt aufweist, so verändert werden, dass ein linienförmiger Strahlquerschnitt mit weiteren optischen Elementen auch für Teilstrahlen erhalten werden kann.

Dies kann mit dafür geeigneten optischen Linsen erreicht werden, durch die der Laserstrahl gerichtet werden kann. Dies können diffraktive oder refraktive optische Elemente sein, mit denen der Laserstrahl linienförmig geformt und die Leistungsdichte im Strahlquerschnitt homogener gemacht werden kann.

Der Strahlquerschnitt kann mit geeigneten optischen Linsen, insbesondere Zylinderlinsen oder einem Paar anamorphotischer Prismen vergrößert werden.

Ein so veränderter Laserstrahl mit linienförmigem Strahlquerschnitt kann mit mindestens einer Zylinderlinse auf die Oberfläche eines zur räumlichen Manipulation elektromagnetischer Strahlung ausgebildeten Elements gerichtet sein. Mit diesem zur räumlichen Manipulation elektromagnetischer Strahlung ausgebildeten Element kann dann die Phase (bei π/2) an den Einzelelementen, durch deren einzelne Ansteuerung verändert werden. Die Einzelelemente bilden also Phasenwechselelemente, die eine hohe Schaltgeschwindigkeit erreichen. Dabei kann die SLM-Variante von Silicon Light Machines genutzt werden, die auf der "Grating Light Valve"-Technologie basiert.

Die linienförmigen Teilstrahlen mit veränderter Phasenverteilung weisen eine reduzierte Leistungsdichte auf und können so auf die zu strukturierende Oberfläche gerichtet werden.

So können linienförmige Strukturen mit einer Länge von mehreren Millimetern (bis zu 10 mm) und einer Breite von wenigen Mikrometern (bis zu 50 µm) ausgebildet werden. Dabei können auch einzelne Einzelelemente so angesteuert werden, dass sie in einem "ausgeschalteten Zustand" sind und von ihnen keine Teilstrahlen zur Strukturierung an der Oberfläche ausgehen.

Bei einem zur Strukturierung an der jeweiligen Oberfläche durchgeführten Prozess kann ein linienförmiger Teilstrahl senkrecht zu seiner größten Ausdehnung (Länge) bewegt und dabei die Position und Anzahl von "ausgeschalteten" Einzelelementen des mindestens einen zur räumlichen Manipulation elektromagnetischer Strahlung ausgebildete Elements verändert werden

Mit dieser Ausführung ist es möglich, große Oberflächenbereiche zu strukturieren und je nach Bedarf die Interferenzperiode zu verändern. Es können auch periodische und nichtperiodische Strukturierungen damit ausgebildet werden.

Die Erfindung kann beispielsweise für die Ausbildung von Hologrammen, dekorativer Oberflächen, die Oberflächenfunktionalisierung, wie z.B. eine Mattierung, die Ausbildung von Oberflächen mit verbesserten bzw. veränderten tribologischen Eigenschaften oder die Ausbildung antibakteriell wirkender Oberflächen eingesetzt werden.

Nachfolgend soll die Erfindung beispielhaft näher erläutert werden.

Dabei zeigen:
Figur 1a und b ein erstes Beispiel einer erfindungsgemäßen Anordnung mit einem zur räumlichen Manipulation elektromagnetischer Strahlung ausgebildeten Element, in dem die zwei-Strahlen und die mehrere-Strahlen Interferenz dargestellt ist;
Figur 2a und b ein zweites Beispiel einer erfindungsgemäßen Anordnung mit zwei zur räumlichen Manipulation elektromagnetischer Strahlung ausgebildeten Elementen, in dem die Parallelisierungsfunktion (a) und die Polarisationsfunktion (b) des SLM2 dargestellt sind;
Figur 3 ein drittes Beispiel einer erfindungsgemäßen Anordnung mit einem zur räumlichen Manipulation elektromagnetischer Strahlung ausgebildeten Element, das als elektronisch steuerbares optisches Gitter ausgebildet ist und
Figur 4 ein viertes Beispiel einer erfindungsgemäßen Anordnung mit einem zur räumlichen Manipulation elektromagnetischer Strahlung ausgebildeten Element in zwei Ansichten, in dem die linienförmige Strukturierungskonzept dargestellt ist.

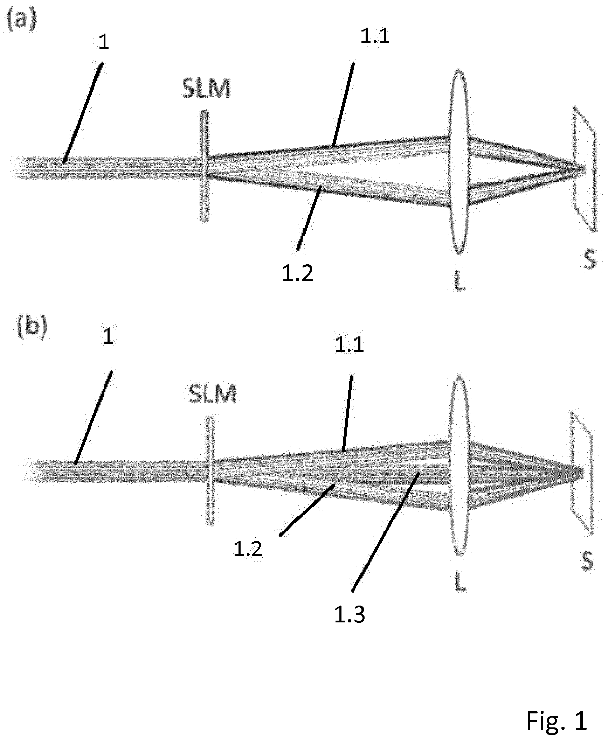

Bei dem in den Figuren 1 a und b gezeigten Beispiel trifft ein Laserstrahl 1 auf ein zur räumlichen Manipulation elektromagnetischer Strahlung ausgebildetes Element SLM und mit diesem in mehrere Teilstrahlbündel 1.1 bis 1.3 zerlegt. In Figur 1 a sind dies zwei Teilstrahlen 1.1 und 1.2 und in Figur 1b sind dies mehr als zwei Teilstrahlbündel 1.1 bis 1.3.

Die Teilstrahlbündel 1.1 bis 1.3 sind auf ein optisches fokussierendes Element (z. B. eine Linse) L als weiteres optisches Element gerichtet und werden so in Richtung der zu strukturierenden Oberfläche eines Substrats S gerichtet, dass Teilstrahlen 1.1 bis 1.3 im Bereich der Oberfläche miteinander interferieren. In den so bestrahlten Oberflächenbereichen erfolgt ein Werkstoffabtrag und/oder eine Modifizierung des Substratwerkstoffs.

Zur Veränderung der Interferenzperiode müssen lediglich Einzelelemente des zur räumlichen Manipulation elektromagnetischer Strahlung ausgebildeten Elements SLMs jeweils einzeln so angesteuert werden, dass sich der Winkel der optischen Achsen der Teilstrahlen verändert. Auch die Anzahl der erhaltenen Teilstrahlbündel 1.1 bis 1.X kann so beeinflusst werden. Dabei gibt X die maximale Anzahl an möglichen Teilstrahlen, die mit einem optischen Aufbau erhalten werden können, wieder.

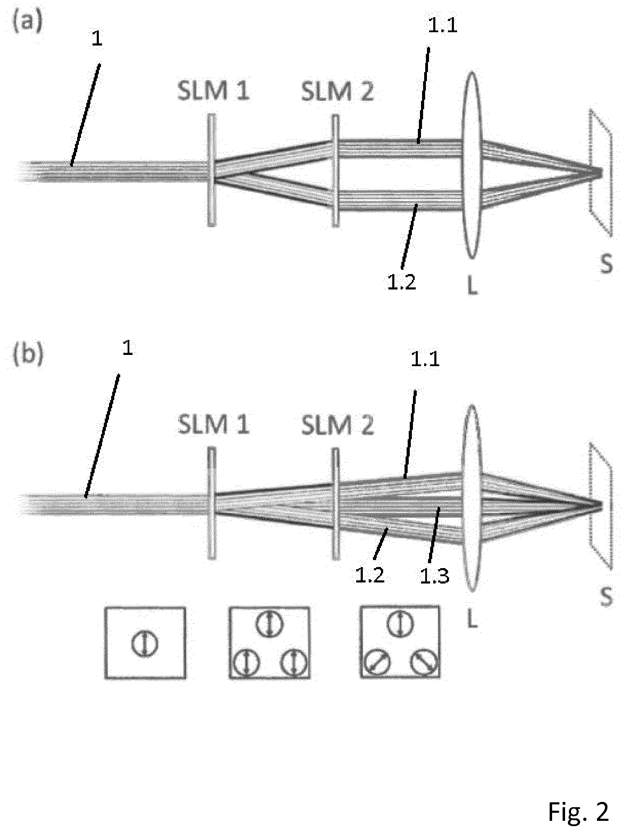

Das in den Figuren 2a und b gezeigte Beispiel unterscheidet sich vom Beispiel nach den Figuren 1a und b lediglich dadurch, dass neben der fokussierenden optischen Linse L im Strahlengang der Teilstrahlenbündel 1.1 bis 1.3 davor ein zweites zur räumlichen Manipulation elektromagnetischer Strahlung ausgebildetes Element SLM (SLM2) angeordnet ist, mit dem die optischen Achsen der Teilstrahlen, der Teilstrahlbündel 1.1 und 1.2 parallel zueinander ausgerichtet werden können. Dieses zur räumlichen Manipulation elektromagnetischer Strahlung ausgebildetes Element SLM2 kann aber auch als Verzögerungselement für elektromagnetische Wellen eingesetzt sein, um beispielsweise die Polarisation der einzelnen Teilstrahlen zu beeinflussen, was in der unteren Darstellung von Figur 2b verdeutlicht ist.

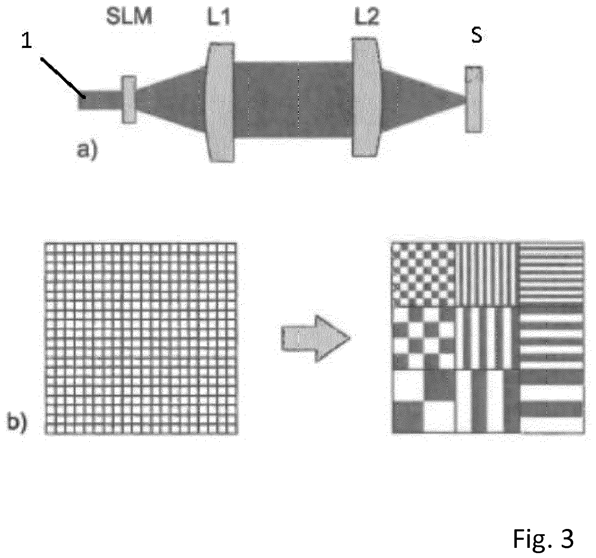

Bei dem in Figur 3 gezeigten Beispiel trifft ein Laserstrahl 1 auf ein zur räumlichen Manipulation elektromagnetischer Strahlung ausgebildetes Element SLM, das mit Einzelelementen, die jeweils einzeln ansteuerbar sind und ein diffraktives optisches Gitter bilden, gebildet ist. Der Laserstrahl 1 wird damit in Teilstrahlen zerlegt. Die Teilstrahlen treffen auf eine optische Linse L1 auf, mit der ihre optischen Achsen parallel zueinander ausgerichtet werden.

Die mit ihren optischen Achsen parallel zueinander ausgerichteten Teilstrahlen treffen auf die fokussierende optische Linse L2 auf, mit der sie in Richtung einer zu struktrurierenden Oberfläche eines Substrats S so fokussiert werden, dass sie im Bereich der zu strukturierenden Oberfläche zumindest teilweise miteinander interferieren.

Die Einzelelemente des zur räumlichen Manipulation elektromagnetischer Strahlung ausgebildeten Elements SLM können dabei so angesteuert werden, dass Einzelelemente Gruppen zugeordnet werden. Mit einer Gruppe von Einzelelementen können Teilstrahlen so beeinflusst werden, dass sie in einem vorgegebenen Oberflächenbereich eine Strukturierung in Form eines vorgegebenen Musters ausbilden.

In der rechten unteren Darstellung von Figur 3 ist beispielshaft gezeigt, wie neun unterschiedliche Muster mit neun Gruppen von Einzelelementen gleichzeitig ausgebildet werden können. In der linken unteren Darstellung ist ein durch Strukturierung erhaltenes Muster gezeigt, bei dem keine Einzelelemente in Gruppen sondern alle Einzelelemente des zur räumlichen Manipulation elektromagnetischer Strahlung ausgebildeten Elements SLMs jeweils einzeln angesteuert worden sind.

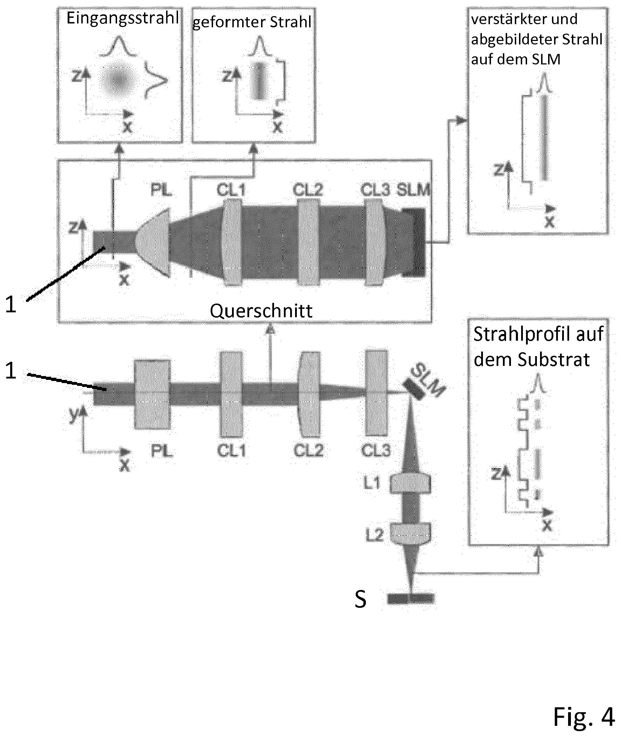

Mit dem in Figur 4 gezeigten Beispiel können überwiegend linienförmige Strukturen ausgebildet werden.

Dazu wird ein herkömmlicher Laserstrahl 1 mit einer symmetrischen Intensitätsverteilung (z. B. Gauss-Verteilung) der Leistung über seinen Strahlquerschnitt auf eine optische Linse PL gerichtet, mit der eine Homogenisierung der Leistungsdichte über den Strahlquerschnitt erreicht wird. In Strahlungsrichtung nach dieser optischen Linse PL sind bei diesem Beispiel drei Zylinderlinsen CL1 bis CL3 nacheinander angeordnet, mit denen ein linienförmiger Strahlquerschnitt erreicht werden kann. Der linienförmige Strahlquerschnitt ist parallel zu einer z-Achse, die senkrecht zur x-Achse ausgerichtet ist, ausgerichtet.

Der so geformte Laserstrahl trifft auf ein zur räumlichen Manipulation elektromagnetischer Strahlung ausgebildetes Element SLM auf, von dessen Einzelelementen er in Richtung einer zu strukturierenden Oberfläche eines Substrates S reflektiert und in Teilstrahlen aufgeteilt wird. Bei diesem Beispiel erfolgt die Reflexion mit einem Winkel von 90 °.

Mit der optischen Linse L1 werden die optischen Achsen der Teilstrahlen parallel zueinander ausgerichtet und mit der weiteren optischen Linse L2 in Richtung zu strukturierender Oberfläche fokussiert, so dass sie im Bereich der zu strukturierenden Oberfläche miteinander interferieren. In einem zweiten Ansatz kann das zur räumlichen Manipulation elektromagnetischer Strahlung ausgebildete Element SLM eine aperiodische Intensitätsverteilung erzeugen, die von der Linsen L1 und L2 abgebildet ist, ohne den Laserstrahl aufzuteilen.

Mit dem zur räumlichen Manipulation elektromagnetischer Strahlung ausgebildeten Element SLM kann auch eine Beeinflussung der Phasen der Teilstrahlen erreicht werden.

## Patentansprüche

1. Optische Anordnung zur Strukturierung von Oberflächen eines Substrates (S), bei der ein Laserstrahl (1) mittels mindestens einem zur räumlichen Manipulation elektromagnetischer Strahlung ausgebildeten Element (SLM), das an eine elektronische Steuerung angeschlossen ist, und mindestens einem weiteren optischen Element (L, PL, CL, SLM) so fokussiert auf eine zu strukturierende Oberfläche des Substrates (S) in Form von Teilstrahlen des Laserstrahls (1) gerichtet ist, dass die Teilstrahlen im Bereich der jeweiligen Oberfläche miteinander interferieren.

2. Anordnung nach Anspruch 1, **dadurch gekennzeichnet, dass** das mindestens eine zur räumlichen Manipulation elektromagnetischer Strahlung ausgebildete Element (SLM) mehrere jeweils einzeln ansteuerbare Laserstrahlung transmittierende oder reflektierende Einzelelemente aufweist, mit denen
eine Veränderung der Ausrichtung der optischen Achsen von Teilstrahlen,
eine Strahlformung von Teilstrahlen,
eine Veränderung der Phase an Teilstrahlen,
eine Ausbildung von Teilstrahlbündeln (1.1 bis 1.X) mit Teilstrahlen und/oder
eine steuerbare Brechung von Teilstrahlen erreichbar ist.

3. Anordnung nach einem der vorhergehenden Ansprüche, **dadurch gekennzeichnet, dass** ein weiteres optisches Element eine optische Linse (L, PL), eine Zylinderlinse (CL) und/oder ein zur räumlichen Manipulation elektromagnetischer Strahlung ausgebildetes Element (SLM) ist.

4. Anordnung nach einem der vorhergehenden Ansprüche, **dadurch gekennzeichnet, dass** ein zur räumlichen Manipulation elektromagnetischer Strahlung ausgebildetes Element (SLM) Gruppen von einzeln ansteuerbaren Laserstrahlung transmittierenden oder reflektierenden Einzelelementen aufweist.

5. Anordnung nach einem der vorhergehenden Ansprüche, **dadurch gekennzeichnet, dass** ein weiteres optisches Element, mit dem linienförmige Teilstrahlen auf eine zu strukturierende Oberfläche gerichtet sind, eine Zylinderlinse oder ein Paar von anamorphotischen Prismen ist.
